# EUROPÄISCHE PATENTSCHRIFT

(11) **EP 3 198 244 B1**
(45) Veröffentlichungstag und Bekanntmachung des Hinweises auf die Patenterteilung: **09.02.2022**
(21) Anmeldenummer: 15757277.7
(22) Anmeldetag: 02.09.2015
(51) Int. Cl.: G01F 23/296, B22F 10/20, B33Y 80/00, G01F 23/284

(54) **VERFAHREN ZUM HERSTELLEN EINES BEHÄLTNISSES FÜR EIN MEDIUM**
METHOD FOR MANUFACTURING A CONTAINER FOR A MEDIUM
PROCÉDÉ DE FABRICATION D'UN RÉCIPIENT POUR UN MILIEU FLUIDE

(30) Priorität: 26.09.2014 DE 102014113993
(43) Veröffentlichungstag der Anmeldung: 02.08.2017
(73) Patentinhaber: Endress+Hauser SE+Co. KG, 79689 Maulburg (DE)
(72) Erfinder: SPANKE, Dietmar, 79585 Steinen (DE)
(74) Vertreter: Andres, Angelika Maria
(86) Internationale Anmeldenummer: PCT/EP2015/070016
(87) Internationale Veröffentlichungsnummer: WO 2016/045919

(56) Entgegenhaltungen:
- WO-A1-2013/121230
- DE-A1-102006 033 819
- US-A1- 2009 229 359

## Beschreibung

Die Erfindung bezieht sich auf ein Behältnis zur Aufnahme eines Mediums.

Bei dem Behältnis kann es sich beispielsweise um einen Behälter oder Tank zum Aufbewahren eines flüssigen Mediums oder eines Schüttguts für ein Füllstandsmessgerät handeln. Weiterhin kann es sich bei dem Behältnis um eine Rohrleitung oder ein Messrohr eines Volumen- oder Massendurchflussmessgeräts handeln. Solche Durchflussmessgeräte werden von der Anmelderin als Inline-Durchflussmessgeräte oder als Clamp-On-Durchflussmessgeräte hergestellt und vertrieben.

Sowohl bei den Inline -Durchflussmessgeräten als auch bei den Clamp-On-Durchflussmessgeräten werden Ultraschall-Messsignale unter einem vorgegebenen Winkel in die Rohrleitung, in der das Medium strömt, eingestrahlt bzw. aus der Rohrleitung ausgestrahlt. Bei Ultraschall-Durchflussmessgeräten ist die jeweilige Position der Ultraschallwandler am Messrohr (Inline) bzw. an der Rohrleitung (Clamp-On). Ultraschall-Durchflussmessgeräte arbeiten nach der Laufzeitdifferenz-Methode und weisen zumindest ein Paar von Ultraschallsonden auf, die Ultraschall-Messsignale entlang definierter Schallpfade aussenden und/oder empfangen. Die Ultraschallsonden sind so angeordnet, dass die durchlaufenen Schallpfade durch den Zentralbereich der Rohrleitung bzw. des Messrohres geführt sind. Eine Regel-/Auswerteeinheit ermittelt den Volumen- und/oder den Massedurchfluss des Mediums in der Rohrleitung bzw. Messrohr anhand der Differenz der Laufzeiten der Messsignale in Strömungsrichtung des Mediums und entgegen der Strömungsrichtung des Mediums.

Bei der Füllstandmessung wird der Füllstand von Flüssigkeiten und Schüttgütern in einem Behältnis mittels Füllstandmessgeräten erfasst. Füllstandsmessgeräte kommen in der Industrie zur Überwachung eines vorbestimmten Füllstands einer Flüssigkeit häufig als Überfüllsicherung oder Trockenlaufschutz bei Pumpen zum Einsatz. Man unterscheidet zwischen der kontinuierlichen Messung mittels Füllstandsensoren und Füllstandgrenzschaltern.

Ein vibronischer Grenzstandschalter umfasst eine schwingfähige Sonde, eine elektromechanische Wandlereinheit zur Anregung der schwingfähigen Sonde zu mechanischen Schwingungen mittels elektrischen Sendesignalen und zum Empfangen der mechanischen Schwingungen der schwingfähigen Sonde und Umwandeln derselben in ein elektrisches Empfangssignal. Ferner umfasst der vibronische Grenzschalter eine Auswerteeinheit, welche an Hand der Frequenz des Empfangssignals bestimmt, ob die schwingfähige Sonde mit Medium bedeckt ist.

Füllstandsensoren arbeiten zum Beispiel mit einer Radarsonde oder einer TDR-Sonde.

Radarsonden arbeiten mit hochfrequenten Radar-Impulsen, die von einer Antenne abgestrahlt und von der Füllgutoberfläche reflektiert werden. Die Laufzeit des reflektierten Radar-Impulses ist direkt proportional zum zurückgelegten Weg. Bei bekannter Behältnisgeometrie lässt sich daraus der Füllstand berechnen. Bevorzugt wird eine Hornantenne als Radarsonde eingesetzt.

TDR-Sonden arbeiten mit hochfrequenten Radar-Impulsen, die entlang eines Stabs geführt werden. Beim Auftreffen der Impulse auf die Medienoberfläche verändert sich der Wellenwiderstand und ein Teil des Sendeimpulses wird reflektiert. Die vom Gerät gemessene und ausgewertete Zeitdauer zwischen dem Senden und dem Empfangen des reflektierten Impulses ist ein direktes Maß für die Distanz zwischen Prozesseinkopplung und der Medienoberfläche.

Alle bisher beschriebenen Messmethoden erfordern eine zusätzliche Öffnung in dem Behältnis, durch welche die Sonde einzuführen ist. Die zusätzliche Öffnung muss mittels einer Flanschverbindung verschlossen und mittels Dichtmittel gegen das Medium abgedichtet werden. Diese Schritte sind mit Aufwand und Kosten verbunden.

Die Schrift WO 2013/121230 A1 beschreibt eine Methode und einen Apparat zur Herstellung eines Reaktionsgefäßes mittels 3D-Druck.

Die Schrift US 2009/0229359 A1 offenbart einen Apparat zur Bestimmung und/oder Überwachung eines Füllstands eines Mediums.

Die Schrift DE 10 2006 033 819 A1 offenbart einen Behälter mit einer Öffnung in einer Seitenwand, in die eine mechanisch schwingfähige Einheit eingebracht ist. Es handelt es sich dabei um eine Schwinggabel, d.h. zwei Gabelzinken sind an einer Membran angebracht.

Der Erfindung liegt die Aufgabe zugrunde, ein Behältnis zur Aufnahme eines Mediums anzugeben, bei dem das Behältnis keine zusätzliche Öffnung zum Beispiel für eine Sonde aufweist.

Die Aufgabe wird durch den Gegenstand der Erfindung gelöst. Der Gegenstand der Erfindung ist ein Behältnis zur Aufnahme eines Mediums, wobei das Behältnis an einer vorbestimmten Position seiner Wandung eine Membran aufweist, wobei die Membran eine geringere Dicke aufweist als die Wandung des Behältnisses, wobei die Membran an einer Innenfläche eine Schwinggabel aufweist, die in das Innere des Behältnisses hineinragt, wobei das Behältnis mit Membran und Schwinggabel über ein dreidimensionales Modell erstellt ist und über ein generatives schichtweises Verfahren einstückig aus zumindest einem Rohmaterial entsprechend dem dreidimensionalen Modell gefertigt ist.

Das Behältnis im Sinne der Erfindung ist ein Behältnis mit einer integrierten Sondeneinheit, in diesem Fall mit einer integrierten Schwinggabel. Vorteilhaft an der Erfindung ist, dass das Behältnis mit einer an der Wandung des Behältnisses integrierten Sondeneinheit in einem Arbeitsgang generativ erstellt wird. Die Sondeneinheit wird anschließend über die Wandung des Behältnisses mit einer Sende-/Empfangseinheit verbunden. Auf diese Weise weist das Behältnis keine zusätzliche Öffnung für eine Sondeneinheit oder für eine Sende-/Empfangseinheit auf. Weiterhin vorteilhaft ist, dass das erfindungsgemäße Behältnis als "Disposable" ausgestaltet sein kann. Das bedeutet, dass das Behältnis als ein sogenanntes Wegwerfprodukt ausgebildet wird. Solche Produkte sind kostengünstig und ohne großen Aufwand nach Kundenwunsch herstellbar und können gerade in hygienischen bzw. Lebensmittelbereichen und pharmazeutischen Bereichen gut eingesetzt werden.

Gemäß einer vorteilhaften Weiterbildung wird das Herstellen des Behältnisses mittels eines generativen Fertigungsverfahren, insbesondere eines 3-D-Druckverfahrens durchgeführt.

Ein 3D-Drucker ist eine Maschine, die dreidimensionale Werkstücke aufbaut, wobei der Aufbau computergesteuert aus einem oder mehreren flüssigen oder festen Rohmaterialien nach vorgegebenen Maßen und Formen (CAD) erfolgt. Beim Aufbau finden physikalische oder chemische Härtungs- oder Schmelzprozesse statt. Typische Rohmaterialien für das 3D-Druckverfahren sind Kunststoffe, Kunstharze, Keramiken und Metalle.

Gemäß einer vorteilhaften Variante wird Rapid Prototyping (schneller Modellbau), insbesondere Fused Deposition Modeling (Schmelzschichtung) oder Multi Jet Modeling zum Herstellen des Behältnisses verwendet.

Rapid Prototyping (schneller Modellbau) ist der Überbegriff über verschiedene Verfahren zur schnellen Herstellung von Musterbauteilen ausgehend von Konstruktionsdaten.

Rapid-Prototyping ist ein Fertigungsverfahren, das vorhandene elektronische Daten des dreidimensionalen Modells des Behältnisses möglichst ohne manuelle Umwege oder Formen direkt und schnell in ein Behältnis umsetzt. Die unter dem Begriff des Rapid Prototyping bekannt gewordenen Verfahren sind Urformverfahren, die das Behältnis schichtweise aus formlosem oder formneutralem Rohmaterial unter Nutzung physikalischer und/oder chemischer Effekte aufbauen.

Fused Deposition Modeling (Schmelzschichtung) bezeichnet ein Fertigungsverfahren aus dem Bereich des Rapid Prototyping, mit dem das Behältnis schichtweise aus einem schmelzfähigem Kunststoff aufgebaut wird. Maschinen für die Schmelzschichtung gehören zur Maschinenklasse der 3D-Drucker. Dieses Verfahren basiert auf der Verflüssigung eines drahtförmigen Kunststoff- oder Wachsmaterials durch Erwärmung. Beim anschließenden Abkühlen erstarrt das Rohmaterial. Der Rohmaterialauftrag erfolgt durch Extrudieren mit einer in der Fertigungsebene frei verfahrbaren Heizdüse. Bei der schichtweisen Modellherstellung verbinden sich damit die einzelnen Schichten zu einem Behältnis.

Der Begriff Multi-Jet Modeling bezeichnet ein Verfahren des Rapid Prototyping, bei dem das Behältnis durch einen Druckkopf mit mehreren linear angeordneten Düsen, die ähnlich wie der Druckkopf eines Tintenstrahldruckers funktioniert, schichtweise aufgebaut wird. Maschinen, mit denen das Multi-Jet Modeling ausgeführt wird, gehören zur Maschinenklasse der 3D-Drucker. Aufgrund der geringen Größe der mit diesen Systemen erzeugten Tröpfchen können auch feine Details des Behältnisses dargestellt werden.

Als Rohmaterial finden UV-empfindliche Photopolymere Anwendung. Diese Rohmaterialien in Form von Monomeren werden unmittelbar nach dem "Aufdrucken" auf die bereits vorhanden Schichten mittels UV-Licht polymerisiert und dabei vom flüssigen Ausgangszustand in den festen Endzustand überführt.

Gemäß einer vorteilhaften, günstigen Ausgestaltung wird selektives Lasersintern (SLS), Laserauftragschweißen oder Kunststofffreiformen zum Herstellen des Behältnisses verwendet.

Selektives Lasersintern ist ein 3D-Druck-Verfahren, um das Behältnis durch Sintern aus einem pulverförmigen Ausgangsstoff herzustellen.

Lasersintern ist ein generatives Schichtbauverfahren: Das Behältnis wird Schicht für Schicht aufgebaut. Durch die Wirkung der Laserstrahlen können so beliebige dreidimensionale Geometrien erzeugt werden, z. B. Behältnisse, die sich in konventioneller mechanischer oder gießtechnischer Fertigung nicht herstellen lassen.

Meist kommt als Laser ein CO2-Laser, ein Nd:YAG-Laser oder ein Faserlaser zum Einsatz. Das pulverförmige Rohmaterial ist beispielsweise Polyamid oder ein anderer Kunststoff, ein kunststoffbeschichteter Formsand, ein Metall- oder ein Keramikpulver.

Das Pulver wird auf eine Bauplattform mit Hilfe einer Rakel oder Walze vollflächig aufgebracht. Die Schichten werden durch eine Ansteuerung des Laserstrahls entsprechend der Schichtkontur des Bauteils schrittweise in das Pulverbett gesintert oder eingeschmolzen. Die Bauplattform wird nun geringfügig abgesenkt und eine neue Schicht aufgezogen. Das Pulver wird durch Anheben einer Pulverplattform oder als Vorrat in der Rakel zur Verfügung gestellt. Die Bearbeitung erfolgt Schicht für Schicht in vertikaler Richtung. Die Energie, die vom Laser zugeführt wird, wird vom Pulver absorbiert und führt zu einem lokal begrenzten Sintern oder Verschmelzen von Partikeln unter Reduktion der Gesamtoberfläche.

Es werden verschiedene Verfahrensvarianten unterschieden. Bei der klassischen Variante werden die Pulverkörner nur partiell aufgeschmolzen, es findet quasi ein Flüssigphasensinterprozess statt. Diese Variante findet Anwendung beim Sintern von Kunststoff und teilweise beim Sintern von Metall mit Spezialsinterpulver.

Möglich ist auch die direkte Verwendung metallischer Pulver ohne Zusatz eines Binders. Die Metallpulver werden dabei vollständig aufgeschmolzen. Dafür werden in der Regel CW-Laser eingesetzt. Diese Verfahrensvariante wird auch als Selektives Laserschmelzen (SLM) bezeichnet.

Laserauftragschweißen gehört zum Cladding (Auftragschweißen), bei dem auf ein Werkstück ein Oberflächenauftrag mittels Aufschmelzen und gleichzeitigem Aufbringen eines nahezu beliebigen Rohmaterials erfolgt. Dies kann in Pulverform z. B. als Metallpulver oder auch mit einem Schweißdraht bzw. -band geschehen. Beim Laserauftragschweißen dient als Wärmequelle ein Laser hoher Leistung, vornehmlich Diodenlaser oder Faserlaser, früher auch CO2- und Nd:YAG-Laser.

Beim Laserauftragschweißen mit Pulver erhitzt der Laser das Werkstück meist defokussiert und schmilzt es lokal auf. Gleichzeitig wird ein inertes Gas gemischt mit feinem Metallpulver zugeführt. Die Versorgung des Wirkbereichs mit dem Metall-/Gasgemisch erfolgt über Schlepp- oder Koaxialdüsen. An der erhitzten Stelle schmilzt das Metallpulver auf und verbindet sich mit dem Metall des Werkstücks. Neben Metallpulver können auch keramische Pulverwerkstoffe, speziell Hartstoffe, verwendet werden. Das Laserauftragschweißen mit Draht bzw. Band funktioniert analog zum Verfahren mit Pulver, jedoch mit Draht bzw. Band als Zusatzwerkstoff.

Beim Kunststofffreiformen wird ein sogenannter Freeformer verwendet. Der Freeformer schmilzt wie beim Spritzgießen Kunststoffgranulate auf und erzeugt aus der flüssigen Schmelze Tröpfchen, aus denen additiv - also Schicht für Schicht - das Behältnis aufgebaut wird. Damit ist die individuelle Teilefertigung aus 3D-CAD-Bauteildaten ganz ohne Spritzgießwerkzeug möglich.

Die Rohmaterialaufbereitung funktioniert prinzipiell wie beim Spritzgießen. Das Granulat wird in die Maschine eingefüllt. Ein beheizter Plastifizierzylinder führt die Kunststoffschmelze zu einer Austragseinheit. Deren Düsenverschluss mit hochfrequenter Piezotechnik ermöglicht schnelle Öffnungs- und Schließbewegungen und erzeugt so unter Druck die Kunststofftröpfchen, aus denen sich das Kunststoffteil staub- und emissionsfrei additiv aufbaut.

Beim Freeformer bleibt die Austragseinheit mit Düse genau in ihrer vertikalen Position. Stattdessen bewegt sich der Bauteilträger. Neben einem serienmäßig über drei Achsen beweglichen Bauteilträger steht optional eine Variante mit fünf Achsen zur Verfügung. Da das Gerät über zwei Austragseinheiten verfügt, kann es auch zwei Rohmaterialien oder Farben kombiniert verarbeiten.

Gemäß einer vorteilhaften Ausführungsform sind das Behältnis, die Membran und die Schwinggabel aus demselben Rohmaterial oder aus unterschiedlichen Rohmaterialien ausgebildet. Sind das Behältnis und die Sondeneinheit einstückig aus einem Rohmaterial, so kann das Behältnis in einem Arbeitsschritt hergestellt werden. Sind das Behältnis und die Sondeneinheit aus zwei oder mehreren verschiedenen Rohmaterialien, kann das Behältnis bzw. die Sondeneinheit durch die Wahl der Rohmaterialien an unterschiedliche Medien angepasst werden.

Gemäß einer vorteilhaften Variante umfasst das Rohmaterial Polystyrol (PS), Polypropylen (PP), Polyetheretherketon (PEEK) Polyamid (PA), insbesondere mit Zusätzen wie Glasfaser, Karbonfaser, Glaskugeln oder Aluminium. Metalle, Glas und diverse Fasern in dem Kunststoff verstärken das Behältnis und machen es stabiler und widerstandsfähiger.

Gemäß einer günstigen Ausführungsform umfasst das Rohmaterial Aluminium, Titan, Kobalt, Chrom, Stahl, insbesondere Edelstahl, Gold, Nickel, insbesondere Nickellegierungen. Diverse Metalle eignen sich besonders gut, um das Behältnis stabil und robust auszugestalten.

Erfindungsgemäß weist das Behältnis an einer die Sondeneinheit aufweisenden Wandung eine Membran auf, wobei die Membran eine geringere Dicke aufweist als die Wandung des Behältnisses. Die dünnere Wandung der Membran führt dazu, dass beim Anregen der Membran die Schwingungen der Membran stark gedämpft an die Wandung des Behältnisses übertragen werden.

Die Erfindung wird anhand der nachfolgenden Zeichnungen näher erläutert. Es zeigt:
Fig. 1: einen Längsschnitt eines erfindungsgemäßen Behältnisses mit einer Schwinggabel, und
Fig. 2 einen Längsschnitt eines Behältnisses mit einer TDR-Sonde, das nicht Teil der vorliegenden Erfindung ist.

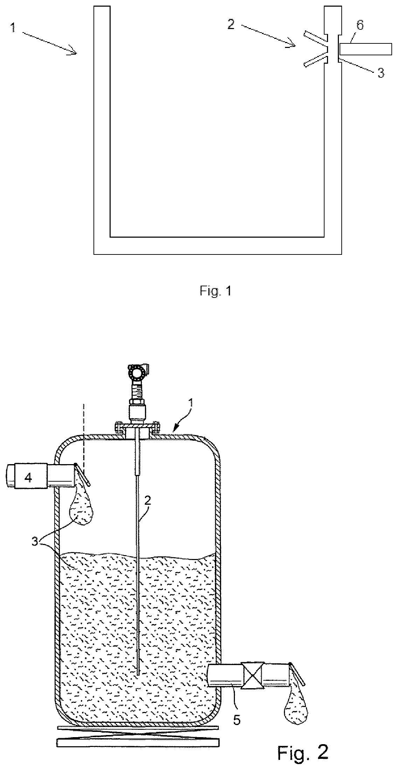

Fig. 1 zeigt einen Längsschnitt eines Behältnisses 1 mit einer integrierten Sondeneinheit 2 für ein Medium. Das Behältnis 1 weist an einer vorbestimmten Position der Wandung des Behältnisses 1 eine geringere Wanddicke auf. Diese Stelle mit der geringeren Wanddicke dient als Membran 3. Eine Sende-/Empfangseinheit 6 wird von außerhalb des Behältnisses 1 mit der Membran 3 kontaktiert, so dass die Sende-/Empfangseinheit die Membran 3 zu Schwingungen anregt und Schwingungen der Membran 3 empfängt und auswertet. Die Membran 3 weist an einer der Sende-/Empfangseinheit gegenüberliegende Seite die Sondeneinheit 2 auf, die in das Innere des Behältnisses 1 hineinragt, wobei die Sondeneinheit 2 als eine Schwinggabel ausgebildet ist. Das Behältnis 1, die Membran 3 und die Schwinggabel 2 sind einstückig aus Edelstahl ausgebildet. Alternativ können die Sondeneinheit 2 aus Kunststoff und das Behältnis 1 aus Edelstahl oder umgekehrt ausgebildet sein. Ferner kann das Behältnis 1 als ein Wegwerfprodukt (Disposable) ausgestaltet sein.

Um ein erfindungsgemäßes Behältnis 1 und/oder die Sondeneinheit 2 entsprechend Fig. 1 aus Edelstahl auszugestalten ist das selektive Lasersintern (SLS) vorteilhaft. Sollte jedoch das Behältnis 1 und/oder die Sondeneinheit 2 aus einem Kunststoff hergestellt werden, empfiehlt es sich das Behältnis 1 mittels Fused Deposition Modeling (Schmelzschichtung) herzustellen. Die elektronischen Daten des dreidimensionalen Modells des Behältnisses werden an Kunden geliefert. Die elektronischen Daten enthalten mehrere Optionen, die das Behältnis dermaßen ausbilden, dass das Behältnis an ein bestimmtes Medium angepasst ist. So kann der Kunde das Behältnis für eine einmalige Anwendung eines Mediums ausdrucken und anschließend wegwerfen.

Fig. 2 zeigt einen Längsschnitt eines Behältnisses 1 mit einer an dem Behältnis 1 integrierten Sondeneinheit 2, die als TDR-Sonde 2 ausgestaltet ist. Das Behältnis 1 und die TDR-Sonde 2 können einstückig aus Edelstahl oder aus einem Kunststoff ausgebildet sein. Das Behältnis 1 und die TDR-Sonde 2 können jedoch auch aus verschiedenen Materialien hergestellt sein. Zum Beispiel kann das Behältnis 1 aus Kunststoff und die TDR-Sonde 2 aus Edelstahl sein. Ein aus einem Kunststoff hergestelltes Behältnis 1 ist als ein Wegwerfprodukt (Disposable) ausgestaltet. Auf diese Weise ist es möglich, lediglich die elektronischen Daten des dreidimensionalen Modells des Behältnisses 1 an den Kunden weiterzugeben. Der Kunde kann dann das

Behältnis für ein bestimmtes Medium drucken.

Das Behältnis 1 ist aus Metall oder einem Kunststoff ausgebildet. Soll das Behältnis 1 und/oder die TDR-Sonde 2 aus Metall ausgebildet sein, ist das selektive Lasersintern (SLS) als 3-D-Druckverfahren vorteilhaft. Das Behältnis 1 wird beim SLS aus einem Metallpulver gesintert. Das nicht gesinterte Pulver im Inneren des Behältnisses 1 kann durch eine Einlassöffnung 4 oder eine Auslassöffnung 5, durch die ein Medium 3 ein und ausströmbar ist, abgeführt werden.

Für ein Behältnis 1 und/oder eine TDR-Sonde 2 aus einem Kunststoff ist Fused Deposition Modeling vorteilhaft. Das Innere des Behältnisses 1 ist mit einem Stützmaterial zu stützen, damit ein Oberteil des Behältnisses 1 während des 3-D-Druckvorgangs nicht einbricht. Das Stützmaterial kann nach dem Druckvorgang durch die Einlassöffnung 4 oder die Auslassöffnung 5 aus dem Behältnis 1 herausgewaschen oder herausgespült werden.

## Patentansprüche

1. Behältnis (1) zur Aufnahme eines Mediums, wobei das Behältnis an einer vorbestimmten Position seiner Wandung eine Membran aufweist, wobe die Membran (3) eine geringere Dicke aufweist als die Wandung des Behältnisses (1), wobei die Membran (3) eine Schwinggabel (2) aufweist, die in das Innere des Behältnisses (1) hineinragt, wobei das Behältnis (1) mit Membran (3) und Schwinggabel (2) über ein dreidimensionales Modell erstellt ist und über ein generatives schichtweises Verfahren einstückig aus zumindest einem Rohmaterial entsprechend dem dreidimensionalen Modell gefertigt ist.

2. Behältnis nach Anspruch 1, wobei das Behältnis (1), Membran (3) und Schwinggabel (2) aus demselben Rohmaterial oder aus unterschiedlichen Rohmaterialien ausgebildet sind.

3. Behältnis nach Anspruch 1 oder 2,
wobei das Rohmaterial Polystyrol (PS), Polypropylen (PP), Polyetheretherketon (PEEK) Polyamid (PA), insbesondere mit Zusätzen wie Glasfaser, Karbonfaser, Glaskugeln oder Aluminium, umfasst.

4. Behältnis nach Anspruch 1 oder 2,
wobei das Rohmaterial Aluminium, Titan, Kobalt, Chrome, Stahl, insbesondere Edelstahl, Gold, Nickel, insbesondere Nickellegierungen umfasst.

5. Behältnis nach einem der vorhergehenden Ansprüche,
wobei das Behältnis (1) mittels eines generativen Fertigungsverfahren, insbesondere eines 3-D-Druckverfahrens hergestellt ist.

6. Behältnis nach einem oder mehreren der vorhergehenden Ansprüche,
wobei das Behältnis (1) über Rapid Prototyping, insbesondere über Fused Deposition Modeling (Schmelzschichtung) oder Multi Jet Modeling erstellt ist.

7. Behältnis nach mindestens einem der vorhergehenden Ansprüche,
wobei das Behältnis (1) über selektives Lasersintern (SLS), Laserauftragschweißen oder Kunststofffreiformen erstellt ist.

## Claims

1. Vessel (1) designed to hold a medium, said vessel having a membrane at a predetermined position of its wall, wherein the membrane (3) has a thickness that is less than that of the wall of the vessel (1), wherein the membrane (3) has a tuning fork (2), which projects into the vessel (1), wherein the vessel (1) with the membrane (3) and the tuning fork (2) are created using a three-dimensional model and are made from a single piece from at least one raw material complying with the three-dimensional model by means of a generative layering process.

2. Vessel as claimed in Claim 1, wherein the vessel (1), the membrane (3) and the tuning fork (2) are made from the same raw material or from different raw materials.

3. Vessel as claimed in Claim 1 or 2,
wherein the raw material comprises polystyrene (PS), polypropylene (PP), polyether ether ketone (PEEK) polyamide (PA), particularly with additives such as fiberglass, carbon fiber, glass beads or aluminum.

4. Vessel as claimed in Claim 1 or 2,
wherein the raw material comprises aluminum, titanium, cobalt, chrome, steel, particularly stainless steel, gold, nickel, particularly nickel alloys.

5. Vessel as claimed in one of the previous claims,
wherein the vessel (1) is made using a generative manufacturing technique, particularly a 3D printing method.

6. Vessel as claimed in one or more of the previous claims,
wherein the vessel (1) is created using rapid prototyping, particularly fused deposition modeling or multi jet modeling.

7. Vessel as claimed in at least one of the previous claims,
wherein the vessel (1) is made using selective laser sintering (SLS), laser cladding or plastic freeforming.

## Revendications

1. Récipient (1) destiné à recevoir un produit, le récipient présentant une membrane à une position prédéterminée de sa paroi, la membrane (3) présentant une épaisseur inférieure à celle de la paroi du récipient (1), la membrane (3) présentant une fourche vibrante (2), qui fait saillie à l'intérieur du récipient (1), le récipient (1) avec la membrane (3) et la fourche vibrante (2) étant généré par l'intermédiaire d'un modèle tridimensionnel et étant fabriqué d'une seule pièce à partir d'au moins un matériau brut conformément au modèle tridimensionnel par l'intermédiaire d'un procédé génératif par couches.

2. Récipient selon la revendication 1, pour lequel le récipient (1), la membrane (3) et la fourche vibrante (2) sont formés à partir du même matériau brut ou de matériaux bruts différents.

3. Récipient selon la revendication 1 ou 2,
pour lequel le matériau brut comprend du polystyrène (PS), du polypropylène (PP), du polyétheréthercétone (PEEK), du polyamide (PA), notamment avec des additifs tels que des fibres de verre, des fibres de carbone, des billes de verre ou de l'aluminium.

4. Récipient selon la revendication 1 ou 2,
pour lequel le matériau brut comprend de l'aluminium, du titane, du cobalt, du chrome, de l'acier, notamment de l'acier inoxydable, de l'or, du nickel, notamment des alliages de nickel.

5. Récipient selon l'une des revendications précédentes,
le récipient (1) étant fabriqué au moyen d'un procédé de fabrication générative, notamment un procédé d'impression 3D

6. Récipient selon l'une ou plusieurs des revendications précédentes,
le récipient (1) étant réalisé par prototypage rapide, notamment par modélisation par dépôt de matière fondue (« Fused Deposition Modeling ») ou par modélisation multijet (Multi Jet Modeling »).

7. Récipient selon au moins l'une des revendications précédentes,
le récipient (1) étant fabriqué par frittage sélectif au laser (SLS), soudage par dépôt laser ou moulage libre de matière plastique.
